# EUROPEAN PATENT SPECIFICATION

(11) **EP 4 565 893 B1**
(45) Date of publication and mention of the grant of the patent: **28.01.2026**
(21) Application number: 23798753.2
(22) Date of filing: 27.10.2023
(51) Int. Cl.: G01S 5/02, H04W 4/02

(54) **METHOD AND APPARATUS FOR INDICATING POSITIONING AVAILABILITY BASED ON NETWORK CONGESTION**
VERFAHREN UND VORRICHTUNG ZUR ANZEIGE DER POSITIONIERUNGSVERFÜGBARKEIT AUF DER BASIS VON NETZWERKÜBERLASTUNG
PROCÉDÉ ET APPAREIL POUR INDIQUER UNE DISPONIBILITÉ DE POSITIONNEMENT SUR LA BASE D?UNE CONGESTION DE RÉSEAU

(30) Priority: 08.11.2022 GB 202216596
(43) Date of publication of application: 11.06.2025
(73) Proprietor: Nokia Technologies Oy, 02610 Espoo (FI)
(72) Inventor: SAHIN, Taylan, 81739 Munich (DE); SEHIER, Philippe, 78100 78100 Saint Germain en Laye (FR); MICHALOPOULOS, Diomidis, 81541 Munich (DE); SÄILY, Mikko, 07150 Laukkoski (FI); BARACCA, Paolo, 81669 Munich (DE)
(74) Representative: Nokia EPO representatives
(86) International application number: PCT/EP2023/080139
(87) International publication number: WO 2024/099804

(56) References cited:
- WO-A1-2021/224880
- US-A1- 2022 053 411
- ESA: "Discussion on use cases and KPIs for position integrity", vol. RAN WG2, no. Electronic meeting; 20200817 - 20200828, 6 August 2020 (2020-08-06), XP052360760, Retrieved from the Internet <URL:https://ftp.3gpp.org/tsg_ran/WG2_RL2/TSGR2_111-e/Docs/R2-2007646.zip R2-2007646 Discussion on use cases and KPIs for position integrity.docx> [retrieved on 20200806]
- LENOVO ET AL: "On-Demand DL-PRS Support", vol. RAN WG2, no. Online; 20211101 - 20211111, 21 October 2021 (2021-10-21), XP052066297, Retrieved from the Internet <URL:https://ftp.3gpp.org/tsg_ran/WG2_RL2/TSGR2_116-e/Docs/R2-2109826.zip R2-2109826_On-DemandPRS_LenMM.docx> [retrieved on 20211021]

## Description

### TECHNICAL FIELD

The subject disclosure generally relates to wireless communication systems and more particularly, to wireless communication systems allowing to provide indication of positioning availability based on network congestion, proactively or reactively. Yet more particularly, the subject disclosure provides methods and apparatuses of controlling a positioning service.

### BACKGROUND

Wireless telecommunication systems are under constant development. There is a need for higher data rates and high quality of service. Reliability requirements are constantly rising and ways and means to ensure reliable connections and data traffic while keeping transmission delays minimal are constantly under development.

Standardization bodies such as Third Generation Partnership Project (3GPP) are studying potential solutions for efficient operation of wireless communication in new radio (NR) networks. The next generation mobile wireless communication system 5G/NR will support a diverse set of use cases and a diverse set of deployment scenarios. Besides the typical mobile broadband use case, NR is being developed to also support Machine Type Communication (MTC), Ultra Reliable Low Latency Communication (URLCC), side-link device-to-device (D2D) and other use cases.

Positioning and location services have been topics in LTE standardization. An objective was to fulfill regulatory requirements for emergency call positioning.

Use cases related to positioning in URLLC typically requires high integrity performance. Example use cases include Vehicle-to-everything Communications (V2X), autonomous driving, unmanned aerial vehicle (UAV) such as drones, eHealth, rail and maritime, emergency and mission critical. In use cases in which large errors can lead to serious consequences such as wrong legal decisions or wrong charge computation, etc., the integrity reporting may become crucial.

For positioning and location services, positioning integrity is considered a measure of the trust in the accuracy of the position-related data and the ability to provide timely warnings based on assistance data provided by the network. In Release 17, the focus was on global navigation satellite system (GNSS) integrity. For Release 18, other positioning techniques as well as relevant integrity aspects of mission critical use cases relying on positioning estimates and the corresponding uncertainty estimates are considered. Integrity enables applications to make the correct decisions based on the reported position, e.g., when monitoring a robotic arm to decide whether its arm movement are within allowed limits to ensure safety distances to humans and other objects. Thus, there is a need for reliable mechanisms to allow achieving positioning integrity and accuracy of positioning and location services.

US 2022/053411 A1 discloses a method to adjust Positioning Reference Signal (PRS) pattern following indication of positioning performance degradation, i.e. a user equipment (UE) receives a message from the network indicating a degradation of the positioning performance and the UE controls the PRS pattern to adjust to the degradation, e.g. reduces the number of PRS to reduce congestion.ESA: "Discussion on use cases and KPIs for position integrity",3GPP DRAFT; R2-2007646, discloses a system which evaluates the position integrity (or reliability) and provides this information to location based application which adapts the application performance to the received positioning integrity.

WO 2021/224880 A1 discloses a method for a UE or a network to request more PRS in case of positioning degradation.

LENOVO ET AL: "On-Demand DL-PRS Support",3GPP DRAFT; R2-2109826 discloses a system which evaluates the position integrity (or reliability) and provides this information to location based application which adapts the application performance to the received positioning integrity.

### SUMMARY

It is an object of the subject disclosure to provide a mechanism contributing to achieve positioning integrity and accuracy of positioning and location services. There are provided methods and apparatuses of controlling positioning and location services to improve integrity and accuracy. The invention is defined by the appended independent claims.

According to a first aspect of the subject disclosure, a user device (e.g., user equipment (UE)) or an apparatus in such a user device is provided. The user device or apparatus according to the first aspect comprises at least one processor and at least one memory including computer program code. The computer program code causes the apparatus or user device, when executed with the at least one processor, to: receive a first message related to a degradation of a first positioning technique related to the positioning service, wherein the first message indicates a second positioning technique and control the positioning service based on the first message.

In some examples of the first aspect, the first message may comprise at least one of an indication indicating that a positioning quality of service (QoS) requirement for the first positioning technique is not guaranteed or an indication indicating that a positioning integrity requirement for the positioning service is not guaranteed.

In some examples of the first aspect, the indication may indicate that the positioning QoS requirement is not guaranteed for at least one of a specified area or a specified time. The specified area may, in some examples, comprise one or more transmission and reception point (TRP) identifiers and/or road side unit (RSU) identifiers. The one or more TRP identifiers and/or RSU identifiers may be defined as a list.

In some examples of the first aspect, the positioning QoS requirement may comprise at least one of a latency, a time to alert (TTA), or an accuracy.

In some examples of the first aspect, the first message may include recommendation information indicating at least one positioning technique that is not available.

In some examples of the first aspect, the first message may include recommendation information indicating at least one positioning technique to be available.

### LIST OF ABBREVIATIONS

In the subject disclosure, the following abbreviations are used and should be understood in accordance with the given definitions:
- DL: Downlink
- gNB: Next generation (5G) NodeB
- LMF: Location Management Function
- LPP: LTE Positioning Protocol
- NRPPa: NR Positioning Protocol A
- NW: Network
- QoS: Quality of Service
- RAT: Radio Access Technology
- RRC: Radio Resource Control
- SL: Sidelink
- TTA: Time to Alert
- UE: User Equipment
- UL: Uplink
- V2X: Vehicle-to-everything Communications

### BRIEF DESCRIPTION OF THE DRAWINGS

A better understanding of the subject disclosure can be obtained when the following detailed description of various embodiments is considered in conjunction with the following drawings, in which:
FIG. 1 shows a schematic diagram of an example wireless network;
FIG. 2 shows a schematic diagram of an example wireless device;
FIG. 3 shows a schematic diagram of an example network node;
FIG. 4 illustrates a shockwave event causing network congestion in a roadside scenario;
FIGS. 5 and 6 illustrate general elements of the mechanisms according to the subject disclosure in a roadside scenario;
FIGS. 7 and 8 illustrate general elements of the reactive/proactive mechanisms according to the subject disclosure in the roadside scenario;
FIG. 9 illustrates a flow chart of a method of controlling a positioning service, performed by a user device, according to some embodiments;
FIG. 10 illustrates a block diagram of an example wireless device with modules for implementing the method of FIG. 9;
FIG. 11 illustrates a flow chart of a method of controlling a positioning service, performed by a network, according to some embodiments;
FIG. 12 illustrates a block diagram of an example network node with modules for implementing the method of FIG. 11;
FIGS. 13 to 16 illustrate exemplary message sequence diagrams of the methods of controlling a positioning service according to some embodiments; and
FIG. 17 illustrates a block diagram of an example virtualized processing for implementing the method of FIGS. 9 and 11.

### DETAILED DESCRIPTION

The examples and embodiments set forth below represent information to enable those skilled in the art to practice the subject disclosure. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, "plurality" means two or more. As used herein, a "set" of items may include one or more of such items. As used herein, whether in the subject disclosure or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims or the subject disclosure to modify an element does not by itself connote any priority, precedence, or order of one element over another or the temporal order in which acts of a method are performed, but are used merely as labels to distinguish one element having a certain name from another element having a same name (but for use of the ordinal term) to distinguish the elements. As used herein,"and/or" and "at least one of" means that the listed items are alternatives, but the alternatives also include any combination of the listed items.

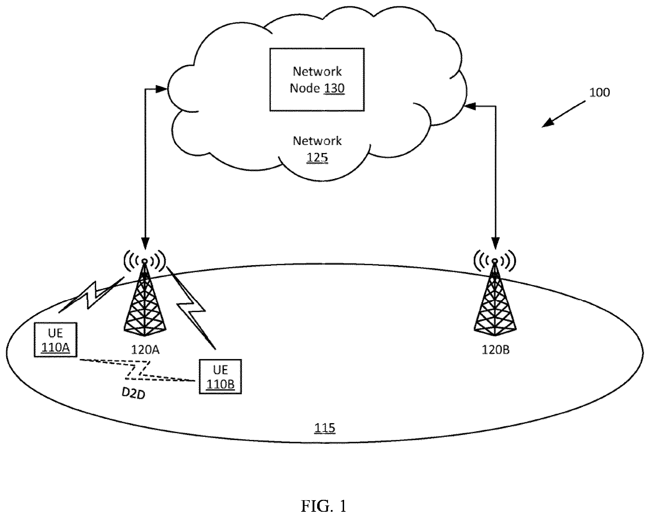

Before explaining the examples according to the subject disclosure in detail, certain general principles of a wireless communication system are briefly explained with reference to FIGS. 1 to 3 to assist in understanding the technology underlying the described examples.

FIG. 1 illustrates an example of a wireless network 100 that may be used for wireless communications. Wireless network 100 includes wireless devices, such as UEs 110 (e.g., 110A-110B), and network nodes, such as radio access nodes 120 (e.g., 120A-120B) (e.g., eNBs, gNBs, etc.), connected to one or more network nodes 130 via an interconnecting network 125. The network 100 may use any suitable deployment scenarios. UEs 110 within coverage area 115 may each be capable of communicating directly with radio access nodes 120 over a wireless interface. In some embodiments, UEs 110 may also be capable of communicating with each other via D2D communication.

As an example, UE 110A may communicate with radio access node 120A over a wireless interface. That is, UE 110A may transmit wireless signals to and/or receive wireless signals from radio access node 120A. The wireless signals may contain voice traffic, data traffic, control signals, and/or any other suitable information.

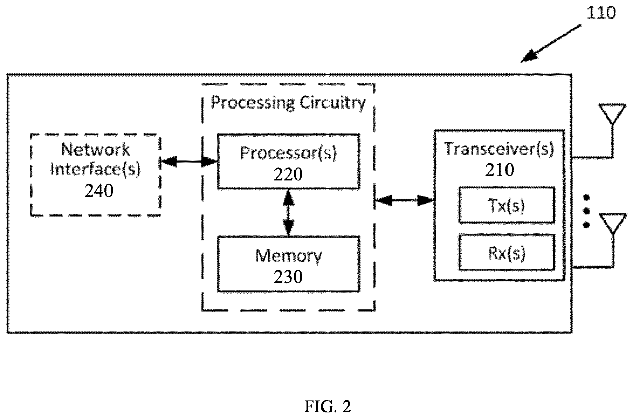

As used herein, the term "user equipment" (UE) has the full breadth of its ordinary meaning and may refer to any type of wireless device which can communicate with a network node and/or with another UE in a cellular or mobile or wireless communication system. Examples of UE are target device, D2D UE, machine type UE or UE capable of machine-to-machine (M2M) communication, personal digital assistant, tablet, mobile terminal, smart phone, laptop embedded equipped (LEE), laptop mounted equipment (LME), USB dongles, ProSe UE, vehicle-to-vehicle (V2V) UE, V2X UE, MTC UE, eMTC UE, FeMTC UE, UE Cat 0, UE Cat M1, narrow band IoT (NB-IoT) UE, UE Cat NB1, etc. Example embodiments of a UE are described in more detail below with respect to FIG. 2.

In some embodiments, an area of wireless signal coverage 115 associated with a radio access node 120 may be referred to as a cell. However, particularly with respect to 5G/NR concepts, beams may be used instead of cells and, as such, it is important to note that the concepts described herein are equally applicable to both cells and beams.

The interconnecting network 125 may refer to any interconnecting system capable of transmitting audio, video, signals, data, messages, etc., or any combination of the preceding. The interconnecting network 125 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 may be a core network node, managing the establishment of communication sessions and other various other functionalities for UEs 110. Examples of network node 130 may include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), location server node, MDT node, etc. UEs 110 may exchange certain signals with the network node 130 using the non-access stratum (NAS) layer. In non-access stratum signaling, signals between UEs 110 and the network node 130 may be transparently passed through the radio access network. In some embodiments, radio access nodes 120 may interface with one or more network nodes 130 over an internode interface.

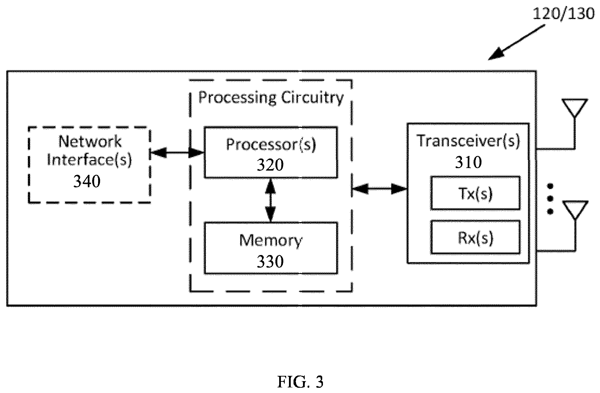

As used herein, the term "network node" has the full breadth of its ordinary meaning and may correspond to any type of radio access node (or radio network node) or any network node, which can communicate with a UE and/or with another network node in a cellular or mobile or wireless communication system. Examples of network nodes are NodeB, MeNB, SeNB, a network node may belonging to MCG or SCG, base station (BS), multi-standard radio (MSR) radio access node such as MSR BS, eNodeB, network controller, radio network controller (RNC), base station controller (BSC), relay, donor node controlling relay, base transceiver station (BTS), access point (AP), transmission point, transmission node, RRU, RRH, node in distributed antenna system (DAS), core network node (e.g., MSC, MME, etc.), O&M, OSS, Self-organizing Network (SON), positioning node (e.g., E-SMLC), MDT, test equipment, etc. Example embodiments of a network node are described in more detail below with respect to FIG. 3.

In some embodiments, radio access node 120 may be a distributed radio access node. The components of the radio access node 120, and their associated functions, may be separated into two main units (or sub-radio network nodes) which may be referred to as the central unit (CU) and the distributed unit (DU). Different distributed radio network node architectures are possible. For instance, in some architectures, a DU may be connected to a CU via dedicated wired or wireless link (e.g., an optical fiber cable) while in other architectures, a DU may be connected a CU via a transport network. Also, how the various functions of the radio access node 120 are separated between the CU(s) and DU(s) may vary depending on the chosen architecture.

Exemplary wireless communication systems are architectures standardized by the 3rd Generation Partnership Project (3GPP). A latest 3GPP based development is often referred to as the long-term evolution (LTE) of the Universal Mobile Telecommunications System (UMTS) radio-access technology (RAT). The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other RAT examples comprise those provided by base stations of systems that are based on technologies such as WLAN and/or Worldwide Interoperability for Microwave Access (WiMax). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-A. Base stations of NR systems may be known as next generation Node Bs (gNBs). Changes to the network architecture may depend on the need to support various radio technologies and finer Quality of Service (QoS) support, and some on-demand requirements for QoS levels to support Quality of Experience (QoE) of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes, or hosts. It should also be understood that the distribution of labour between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UEs exchanging traffic with the data network (DN). The UPF is controlled by an SMF (Session Management Function) that receives policies from a PCF (Policy Control Function). The CN may also include an AMF (Access & Mobility Function).

FIG. 2 is a schematic diagram of an example wireless device, UE 110, in accordance with certain embodiments. UE 110 includes a transceiver 210, processor 220, memory 230, and a network interface 240. In some embodiments, the transceiver 210 facilitates transmitting wireless signals to and receiving wireless signals from radio access node 120 (e.g., via transmitter(s) (Tx), receiver(s) (Rx) and antenna(s)). The processor 220 executes instructions to provide some or all of the functionalities described herein as being provided by UE 110, and the memory 230 stores the instructions executed by the processor 220. In some embodiments, the processor 220 and the memory 230 form processing circuitry.

The processor 220 may include any suitable combination of hardware to execute instructions and manipulate data to perform some or all of the described functions of a wireless device, such as the functions of UE 110 described herein. In some embodiments, the processor 220 may include, for example, one or more computers, one or more central processing units (CPUs), one or more microprocessors, one or more application specific integrated circuits (ASICs), one or more field programmable gate arrays (FPGAs) and/or other logic.

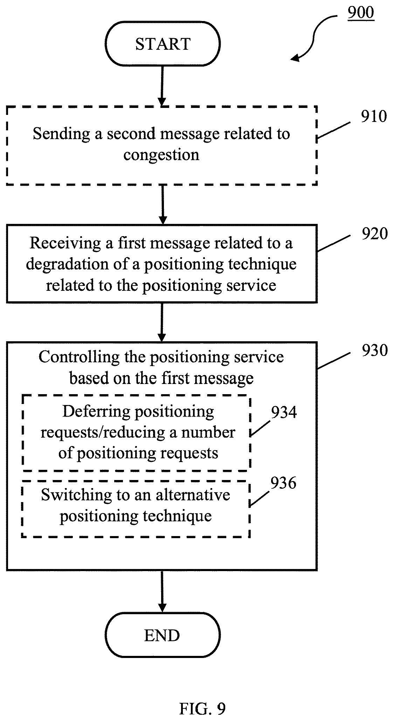

The memory 230 is generally operable to store instructions, such as a computer program, software, an application including one or more of logic, rules, algorithms, code, tables, etc. and/or other instructions capable of being executed by a processor 220. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information, data, and/or instructions that may be used by the processor 220 of UE 110. For example, the memory 230 includes computer program code causing the processor 220 to perform processing according to the method described below with reference to FIG. 9.

The network interface 240 is communicatively coupled to the processor 220 and may refer to any suitable device operable to receive input for UE 110, send output from UE 110, perform suitable processing of the input or output or both, communicate to other devices, or any combination thereof. The network interface 240 may include appropriate hardware (e.g., port, modem, network interface card, etc.) and software, including protocol conversion and data processing capabilities, to communicate through a network.

Other embodiments of UE 110 may include additional components beyond those shown in FIG. 2 that may be responsible for providing certain aspects of the wireless device's functionalities, including any of the functionalities described herein and/or any additional functionalities (including any functionality necessary to support the mechanisms according to the subject disclosure). As an example, UE 110 may include input devices and circuits, output devices, and one or more synchronization units or circuits, which may be part of the processor 220. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

In some embodiments, the wireless device UE 110 may comprise a series of modules configured to implement the functionalities of the wireless device described herein.

It will be appreciated that the various modules may be implemented as combination of hardware and software, for instance, the processor, memory, and transceiver(s) of UE 110 shown in FIG. 2. Some embodiments may also include additional modules to support additional and/or optional functionalities.

FIG. 3 is a schematic diagram of an example radio access node 120 or network node 130. The example radio access node 120 or network node 130 may include one or more of a transceiver 310, processor 320, memory 330, and network interface 340. In some embodiments, the transceiver 310 facilitates transmitting wireless signals to and receiving wireless signals from wireless devices, such as UE 110 (e.g., via transmitter(s) (Tx), receiver(s) (Rx), and antenna(s)). The processor 320 executes instructions to provide some or all of the functionalities described herein as being provided by the radio access node 120 or the network node 130, the memory 330 stores the instructions executed by the processor 320. In some embodiments, the processor 320 and the memory 330 form processing circuitry. The network interface 340 can communicate signals to backend network components, such as a gateway, switch, router, Internet, Public Switched Telephone Network (PSTN), core network nodes or radio network controllers, etc.

The processor 320 can include any suitable combination of hardware to execute instructions and manipulate data to perform some or all of the described functions of the radio access node 120 or the network node 130, such as those described herein. In some embodiments, the processor 320 may include, for example, one or more computers, one or more central processing units (CPUs), one or more microprocessors, one or more application specific integrated circuits (ASICs), one or more field programmable gate arrays (FPGAs) and/or other logic.

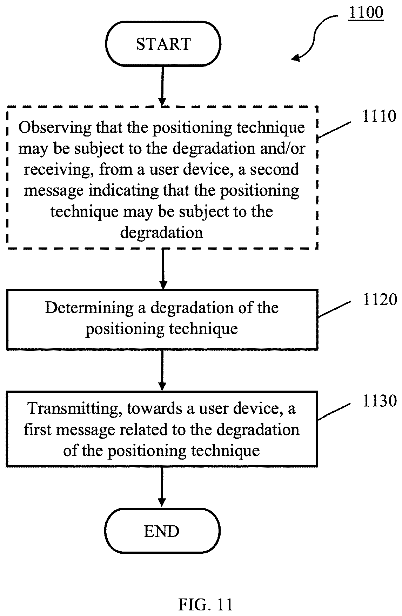

The memory 330 is generally operable to store instructions, such as a computer program, software, an application including one or more of logic, rules, algorithms, code, tables, etc. and/or other instructions capable of being executed by a processor 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information. For example, the memory 330 includes computer program code causing the processor 320 to perform processing according to the method described below with reference to FIG. 11.

In some embodiments, the network interface 340 is communicatively coupled to the processor 320 and may refer to any suitable device operable to receive input for the radio access node 120 or the network node 130, send output from the radio access node 120 or the network node 130, perform suitable processing of the input or output or both, communicate to other devices, or any combination of the preceding. The network interface 340 may include appropriate hardware (e.g., port, modem, network interface card, etc.) and software, including protocol conversion and data processing capabilities, to communicate through a network.

Other embodiments of the radio access node 120 or the network node 130 can include additional components beyond those shown in FIG. 3 that may be responsible for providing certain aspects of the node's functionalities, including any of the functionalities described herein and/or any additional functionalities (including any functionality necessary to support the solutions described herein). The various different types of radio access nodes or network nodes may include components having the same physical hardware but configured (e.g., via programming) to support different radio access technologies, or may represent partly or entirely different physical components.

Processors, interfaces, and memory similar to those described with respect to FIG. 3 may be included in other nodes (such as UE 110, radio access node 120, etc.). Other nodes may optionally include or not include a wireless interface (such as the transceiver described in FIG. 3).

In some embodiments, the radio access node 120 or the network node 130 may comprise a series of modules configured to implement the functionalities of the radio access node 120 or the network node 130 described herein.

It will be appreciated that the various modules may be implemented as combination of hardware and software, for instance, the processor, memory, and transceiver(s) of the radio access node 120 or the network node 130 shown in FIG. 3. Some embodiments may also include additional modules to support additional and/or optional functionalities.

Before referring to FIGS. 9 to 16 and describing the methods of controlling a positioning service according to some embodiments of the subject disclosure, some background information and aspects related to the subject disclosure will be provided.

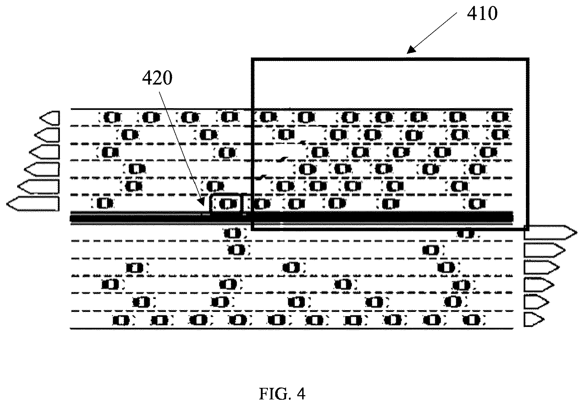

In various scenarios (e.g., road-side scenarios), the network might be congested due to certain conditions in the environment. For example, in case of a V2X scenario, such conditions may arise in case of a highly congested road traffic due to an accident, or shockwave and phantom jams, as illustrated in FIG. 4. As shown in FIG. 3, in a roadside scenario, congested road traffic 410 due to an accident, causing network services such as positioning services used by the user device 420 (e.g., a vehicle) to degrade due to network congestion. The reason is that such unexpected events yield a significantly increased rate of messages (e.g., Intelligent Transportation System (ITS) messages such as Cooperative Awareness Messages (CAMs) and Decentralized Environmental Notification Messages (DENMs)) that are transmitted by vehicles over SL and UL. As a consequence, the resources over SL and/or Uu might get congested. The congestion due to increased data traffic may impact positioning services (for example) such that the transmission of messages or reference signals related to positioning may be delayed or even dropped, which in turn degrades the positioning QoS, mainly in terms of latency and accuracy.

The 3GPP specifications do not provide mechanisms relating to a degradation of positioning techniques or positioning services related to positioning techniques due to network congestion. Specifically, the core network entity controlling the positioning techniques or the positioning services (i.e., Location Management Function (LMF)) has no information of the network conditions, e.g., in terms of congestion or communication traffic load. Prior solutions concern GNSS integrity and propose UE-aided detection of threat to GNSS systems and assistance data signaling. The prior solutions do however not consider the problem of network congestion such as over UL/DL or SL that would hinder the availability and/or QoS/integrity of positioning services.

The subject disclosure provides mechanisms of controlling a positioning service to achieve positioning integrity and accuracy. The subject disclosure addresses the shortcoming of graceful degradation of RAT-dependent positioning QoS under congested network scenarios. The mechanisms of controlling a positioning service according to the subject disclosure enable UEs to still perform positioning up to a certain extent (i.e., positioning QoS) instead of failing completely, e.g., based on proactive/reactive warnings established by the network.

Generally, UEs are notified for QoS availability and continuity for positioning and traffic on at least one of UL, DL, or SL is offloaded dynamically depending on congestion/load conditions in the network. More specifically, the mechanisms according to the subject disclosure include one or more of the following elements.

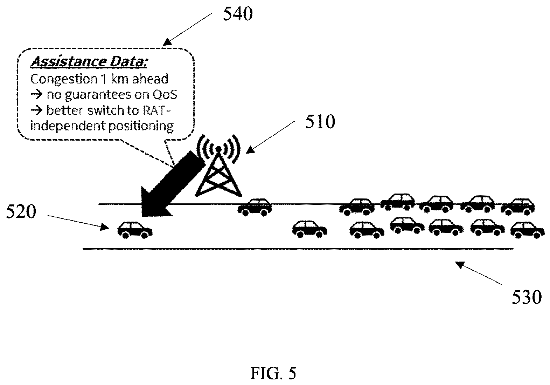

FIG. 5 illustrate general elements of the mechanisms in a roadside scenario. As illustrated in FIG. 5, the network 510 is to provide a first message 540 (e.g., assistance data) to user device(s) 520., The first message is related to a degradation of a first positioning technique (e.g., RAT-dependent positioning technique) related to the positioning service used by the user device(s) 520. Besides, the first message may comprise an indication indicating that certain positioning QoS requirements (e.g., latency, affecting TTA, accuracy) for a specific positioning method (i.e., a specific positioning service, or a specific positioning technique) may not be guaranteed in a certain area and/or for a certain time. Additionally, or alternatively, the first message may comprise an indication (e.g., a warning) indicating that a limited QoS can be guaranteed (e.g., accuracy or latency within a certain range, or above/below threshold). In other words, the network 510 transmits a warning to user device(s) 520 via the first message 540 indicating that positioning QoS cannot be met due to network congestion.

For example, as illustrated in FIG. 5, the network 510 (e.g., a base station such as the network node 120A of FIG. 1 or the LMF) provides the first message 540 (e.g., assistance data) to the user device(s) 520 (e.g., a UE in a vehicle driving along a road, approaching a congestion 530). The first message 540 relates to a RAT-dependent positioning technique and indicates a possible degradation of the RAT-dependent positioning technique which is related to a positioning service. The positioning service is used by the user device(s) 520 to determine a position of the user device(s) 520. As shown in the example, the first message 540 may indicate to the user device(s) 520 that there is a congestion 530 ahead of the user device(s) 520, e.g., in 1 kilometer. The first message 540 may also indicate that positioning QoS cannot be guaranteed due to the congestion 530 in a certain area. The area may be defined as list of Transmission and Reception Points (TRP) and/or Road Side Unit (RSU) identifiers (IDs).

In addition, the first message 540 may include recommendation information. The recommendation information provides indication to the user device(s) 520 that at least one positioning technique (e.g., the RAT-dependent positioning technique) is or is not available. The recommendation information may also indicate (un-)availability in a certain area and/or for a certain time. As shown in the example, the first message may indicate a second positioning technique (e.g., a RAT-independent position technique) to which the user device(s) 520 may switch to avoid that positioning based on the first positioning technique (e.g., the RAT-dependent positioning technique) is degraded.

For example, as illustrated in FIG. 5, the first message 540 include a recommendation to switch to a RAT-independent positioning service. The recommendation may be used in case where different capabilities of the user device(s) 520 need to be supported. Examples of the second positioning technique(s) include Uu-based methods (e.g., downlink time difference of arrival - DL TDoA, multi-cell round trip time - Multi RTT, uplink angle-of-arrival - UL AoA, etc.), SL-based methods, GNSS, other RAT-independent techniques (e.g., motion sensor, Bluetooth, etc.). In this respect, the network 510 (e.g., the LMF) may also determine which specific positioning technique to use in case of Uu-based methods. For example, the network 510 may indicate that RTT method is to be preferred over DL TDoA.

In some specific examples, the network 510 may provide the first message 540 to the user device(s) 520, indicating that "There is a road accident ahead, with high number of positioning requests at network due to congested traffic. Latency of Uu-based positioning techniques, e.g., Multi RTT cannot be satisfied. Instead, switch to SL-based or RAT-independent positioning techniques.". That is, the network 510 provides information to the user device(s) 520 that indicates a degradation related to the Uu-based positioning techniques, that indicates a certain area (e.g., ahead of the user device(s) 520 along the road) where the degradation may possibly exist, and that provides recommendation information relating to the SL-based or RAT-independent positioning techniques to which the user device(s) 520 may switch.

Based on the first message 540 (e.g., the warning, the indication of the degradation, etc.), the user device(s) 520 may control the positioning service or use of the positioning service based on the first message 540. For example, the user device(s) 520 may defer transmitting a positioning request transmission related to the first positioning technique, defer exchanging positioning related messages related to the first positioning technique, reduce a number of the positioning request transmission for the positioning service, reduce a number of the exchanging positioning related messages for the positioning service and/or switch to the second positioning technique or a positioning service related to the second positioning technique recommended by the network 510, thereby avoiding impact on the positioning due to the congestion 530 (e.g., network latency) and help offloading the congested traffic.

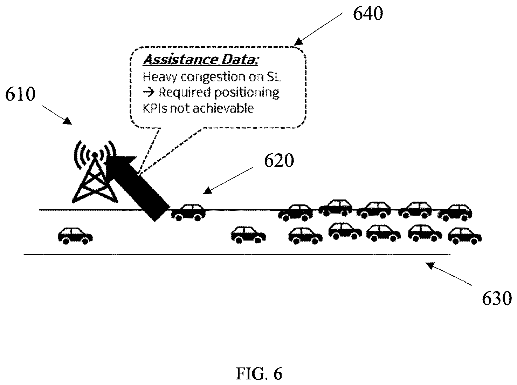

FIG. 6 illustrate further general elements of the mechanisms in the roadside scenario. As illustrated in FIG. 6, user device(s) 620 provide a second message including congestion status information with respect to one or more network performance metrics related to congestion to the network 610 (e.g., an indication on a network congestion having an impact on the positioning QoS). That is, the user device(s) 620 indicate to the network 620 that the first positioning technique (e.g., the RAT-dependent positioning technique) or the positioning service related to the first positioning technique may be subject to the degradation. For example, the user device(s) 620 may provide the second message 640 (e.g., assistance data) to the network 610, including congestion status information indicating heavy traffic/congestion on SL having an impact on the positioning QoS. The second message 640 may also provide further information such as that certain Key Performance Indicators (KPIs) required for the first positioning technique or the positioning service are not achievable due to heavy traffic/congestion.

Exemplary KPIs that can help identify different integrity events include one or more of Alert Limit (i.e., the largest error allowable for safe operation), Time to Alert (TTA) (i.e., the maximum allowable elapsed time from the onset of a positioning failure until the user device announces the alert), Integrity Risk (TR) (i.e., the maximum probability of providing a signal that is out of tolerance without warning in a given period of time), and Protection Level (PL) (i.e., the statistical error bound computed to guarantee that the probability of the absolute position error exceeding the said number is smaller than or equal to the target integrity risk).

The indication (e.g., a warning) provided by the user device(s) 620 to the network 610 may trigger the network 610 to provide the first message 540 shown in FIG. 5 (e.g., the assistance data) to the user device(s) 620, indicating that certain positioning QoS requirements for the first positioning technique may not be guaranteed, as illustrated in FIG. 5.

In principle, the mechanisms according to the subject disclosure provides two different ways to trigger providing the first message related to a degradation of a specific positioning technique to user device(s). The first way (referred to as reactive herein) includes the network (e.g., the LMF and/or gNB) to observe that the specific positioning techniques may be subject to the degradation. For example, the network may observe that positioning QoS (e.g., RAT-based positioning QoS using UL, DL, or SL) cannot be met for certain amount/rate of positioning requests in a certain area (e.g., a certain cell), positioning integrity KPIs are not met, or many rejected/error messages related to positioning. The reason for the observed degradation of the specific positioning technique is not only due to congestion, but may also be due jamming, attacking, etc.

The second way (referred to as proactive herein) includes the user device(s) to inform the network (e.g., the gNB and/or LMF) with the second message about the possible degradation of the specific positioning technique. For example, the user device(s) may inform the network about network traffic congestion on SL (as illustrated in FIG. 6). In another example, within the network, the gNB may inform the LMF about the network traffic congestion on at least one of SL, UL, or DL. In response, the network (e.g., the gNB and/or LMF) may issue the first message related to the degradation (i.e., the warning) based on the assumption/prediction that the network traffic congestion would eventually impact positioning QoS/integrity.

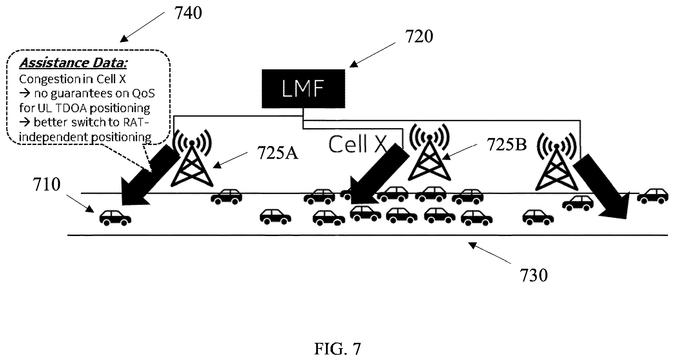

Referring to FIG. 7, general elements of the reactive mechanism according to the subject disclosure in the roadside scenario will now be described.

As described above, in the reactive mechanism, the network sends a first message 740 (e.g., assistance data) related to a degradation of a first positioning technique based on observations and/or indications that the first positioning technique may be subject to the degradation. For example, a network node (e.g., the gNB 725A or the LMF 720) of the network triggers sending the first message 740 to the user device(s) 710 (e.g., UEs) based on observations of the network node and/or indications from user device(s), other network nodes (e.g., gNBs 725A, 725B) of the network, or other network elements (e.g., RSUs, positioning reference units - PRUs) regarding positioning requests, such as with respect to unsatisfied positioning QoS and/or positioning integrity.

According to the reactive mechanism, the LMF 720 determines positioning QoS and/or positioning integrity is not satisfied for a number of requests (e.g., a number of requests exceeding a predetermined threshold), in a certain area (e.g., in a cell such as Cell X, or in a list of cells), per certain positioning technique. For example, the LMF 720 may determine that, in Cell X - more specifically in a cell with a specific Cell ID, the positioning QoS of a number of positioning requests exceeds a predetermined threshold (e.g., 70 percent of the positioning requests) were not satisfied. As described, the network node (e.g., the LMF 720) may configure one or more thresholds to be used in the determination. The thresholds may relate to a number or rate of rejected or unachieved positioning requests over time, area, etc. A reason for the number of positioning requests being not satisfied (i.e., the reason causing the degradation of the positioning technique) may be related to congestion (e.g., congestion 730) avoiding timely transmission of positioning-related signals or messages on UL or DL, but also jamming, attacking, etc.

Alternatively, or additionally, the reactive mechanism may include the user device(s) 710 and/or network nodes (e.g., the gNB 725A, 725B) to determine positioning QoS and/or positioning integrity (e.g., for positioning on at least one of SL, UL, or DL) is not satisfied for a number (or rate) of positioning requests (i.e., positioning requests sent, received, or involved) in a certain area (e.g., in Cell X, in a list of cells, or an out-of-coverage zone). The user device(s) 710 and the gNB 725A, 725B may use a predetermined threshold to determine that the number of positioning requests is not satisfied. As above, the reason for the number of positioning requests being not satisfied may be related to congestion (e.g., congestion 730) avoiding timely transmission of positioning-related signals or messages on at least one of SL, UL, or DL, but also jamming, attacking, etc.

Further, in response to the determination, the user device(s) 710 and/or the gNB 725A, 725B inform the LMF 720 about the degradation of the positioning technique (e.g., the first positioning technique) currently used for the positioning service. For example, the gNB 725A, 725B may inform the LMF 720 via NRPPa protocol, upon a request by the LMF 720 or unsolicited. The user device(s) 710 may inform the LMF 720 by sending the second message (e.g., assistance data) via LPP to LMF (i.e., via the LPP protocol), upon a request by the LMF 720 or unsolicited. Alternatively. the user device(s) 710 may also inform the LMF 720 via the gNB 725A (i.e., the gNB serving the user device). More specifically, the user device(s) 710 first informs the gNB 725A via RRC protocol (e.g., by sending the second message), optionally indicating SL congestion (e.g., reporting Channel Busy Ratio, CBR). In turn, the gNB 725A indicates the information received from the user device(s) 710 to the LMF 720 via NRPPa protocol (e.g., by sending the third or fourth message).

The first message 740 (e.g., the assistance data) sent by the LMF 720 towards the user device(s) 710 indicates the degradation of the positioning technique of the positioning service, causing the user device(s) 710 to control the positioning service based on the first message. For example, first message 740 may inform the user device(s) 710 about the congestion. In one example, the first message 740 indicates that positioning QoS for the positioning technique (e.g., UL TDoA positioning) cannot be guaranteed in the certain area (e.g., the Cell X). Additionally, or alternatively, the first message 740 may comprise an indication (e.g., a warning) indicating that a limited QoS can be guaranteed (e.g., accuracy or latency within a certain range, or above/below threshold). The first message 740 may also comprise an indication (e.g., a recommendation) to switch to a different positioning technique (e.g., SL-based positioning technique, RAT-independent positioning technique). In response to receiving the indication to switch, the user device(s) 710 may control the positioning service to switch to the different positioning technique.

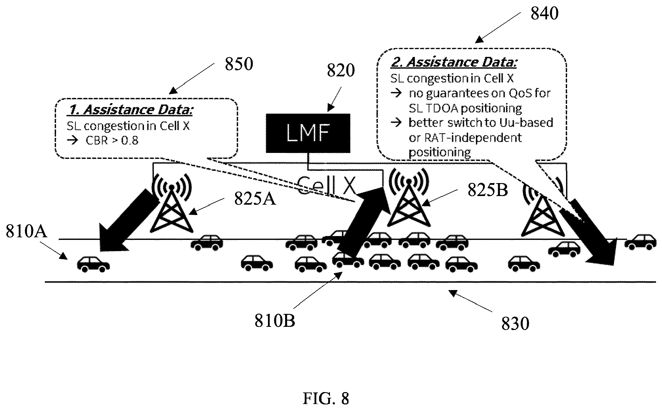

Referring to FIG. 8, general elements of the proactive mechanism according to the subject disclosure in the roadside scenario will now be described.

As described above, in the proactive mechanism, the network sends a first message 840 (e.g., assistance data) related to a degradation of the positioning technique (e.g., the first positioning technique) related to the position service used by the user device based on observations and/or indications that the positioning technique may be subject to the degradation. For example, a network node (e.g., the LMF 820) of the network triggers sending the first message 840 to the user device(s) 810A (e.g., UEs) based on observations of the network node and/or indications from user device(s), other network nodes (e.g., gNBs 825A, 825B) of the network, or other network elements (e.g., RSUs, PRUs, etc.) with regards to network traffic congestion on at least one of UL, DL, or SL.

The first message 840 (e.g., assistance data) sent by the LMF 720 towards the user device(s) 810A indicates the degradation of the positioning technique, causing the user device(s) 810A to control the positioning service based on the first message 840. For example, the first message 840 may inform the user device(s) 810A about the congestion status. In one example, the first message 840 indicates that positioning QoS for the positioning technique (e.g., SL TDoA positioning) cannot be guaranteed in the certain area (e.g., the Cell X). Additionally, or alternatively, the first message 840 may comprise an indication (e.g., a warning) indicating that a limited QoS can be guaranteed (e.g., accuracy or latency within a certain range, or above/below threshold). The first message 840 may also comprise an indication (e.g., a recommendation information) to switch to a different positioning technique (e.g., Uu-based, or RAT-independent positioning technique). In response to receiving the indication to switch, the user device(s) 810A may control the positioning service to switch to the different positioning technique.

According to the proactive mechanism, the UE(s) 810B and/or the network node(s) (e.g., gNBs 825A, 825B) transmits a second message 850 (e.g., assistance data) to LMF 820. The second message 850 includes congestion status information of at least one of UL, DL, or SL, e.g., with respect to one or more network performance metrics related to congestion, such as delay, throughput, latency, packet loss rate, user density (e.g., number of Ues per cell), number/rate of occupied radio resources, measured interference over resources, occurrence of certain (pre-defined) events, etc. In some examples, the network performance metrics may be associated with one or more positioning techniques or one or more positioning services relates to positioning techniques, e.g., number of users per certain area requesting positioning within a certain period of time (e.g., within past X seconds/minutes, etc.) or average latency of positioning requests in a certain period of time (e.g., in the past X minutes, etc.).

Alternatively, or additionally, the UE(s) 810B and/or the network node(s) (e.g., gNBs 825A, 825B) may inform LMF 820 about several pre-defined metrics related to SL congestion, such as SL Channel Busy Ratio (CBR) or SL Channel Occupancy Ratio (CR) via the second message 850. For example, the UE(s) 810B may transmit the second message 850 (e.g., assistance data) to the network node(s) (e.g., gNB 825B) to indicate SL congestion in a certain area (e.g., in Cell X) and that the SL CBR exceeds a certain threshold (e.g., SL CBR > 0.8). The network node(s) (e.g., gNB 825B) may transmit the second message 850 received from the UE(s) 810B, or data derived based on the second message 850, to the LMF 820.

In the proactive mechanism, the network node(s) (e.g., gNBs 825A, 825B) may request providing the second message 850 from the UE(s) 810A, 810B. For example, the gNB 825B may requests UE 810B to provide information relating to the congestion, such as that CBR or CR is reported by the UE 810B to the gNB 825B. In response to receiving the second message 850, the network node(s) (e.g., gNBs 825A, 825B) forwards the second message 850, or the information relating to the congestion, to LMF 820 (e.g., via NRPPa signaling). In the proactive mechanism, the UE(s) 810A, 810B may, alternatively or additionally, report such information to LMF 820 directly (e.g., via LPP). The UE(s) 810A, 810B may report to LMF 820, upon request or unsolicited. The second message 850 is sent by the UE(s) 810A, 810B and/or the gNB(s) 825A, 825B only if one or more of the metrics reach below/above certain values (pre-)configured by the network. For example, as illustrated in FIG. 8, the UE 810B may inform LMF about SL CBR if the UE 810B determined that the SL CBR is above a (pre-)configured value of 0.8 (i.e., SL CBR > 0.8).

Further general elements of the mechanisms according to the subject disclosure include that the network (e.g., LMF) determines and informs users (i.e., user devices, UEs) in and around a certain area (e.g., a cell) and neighboring cells, as well as the corresponding network entities (e.g., gNBs) with the first message (e.g., assistance data). The first message may, for example, indicate one or more of the following: a list of one or more positioning techniques (e.g., positioning services related to one or more positioning techniques) that are not available or not recommended in a certain area for a certain time. For example, a DL-TDoA is not possible in a certain area (e.g., a cell) for a certain time (e.g., the next 10 minutes) due to heavy congestion on DL traffic. Or, the list may indicate one or more alternative positioning techniques (e.g., positioning services related to one or more alternative positioning techniques), such as switching to SL-based or RAT-independent techniques (e.g., GNSS), that are available in a certain area for a certain time. The network (i.e., LMF) may send the first message to the UEs via broadcast, multicast, or dedicated unicast signaling.

The reason that positioning techniques are not available or not recommended may be congestion, avoiding timely transmission of positioning-related messages, but also an external interference source that avoids successful reception of DL PRS. Similarly, an attacker may jam with DL PRS transmissions, yielding inaccurate positioning measurements. According to the mechanisms of the subject disclosure, if such observations related to the certain positioning techniques are reported to LMF, then LMF may guide the UEs to alternative positioning techniques, e.g., switching from Uu-based to SL or RAT-independent positioning techniques.

According to the mechanisms of the subject disclosure, upon receiving the first message (e.g., assistance data, a warning indication) from the network, the UE(s) performs one or more of the following, based on the content of the first message. For example, the UE(s) may defer or reduce mobile-originated positioning requests (MO-LR) or exchange of positioning-related messages associated with the new or ongoing positioning sessions, utilizing the indicated positioning technique (e.g., UL-based, or DL-based positioning) expected to suffer from positioning QoS and/or integrity (i.e., the positioning technique indicated by the first message). The UE(s) may defer or reduce the MO-LR, etc. at least for the certain time, distance, or other thresholds indicated in the first message.

Alternatively, the UE(s) may also utilize recommended or alternative positioning techniques that are different than the ones indicated as suffering from positioning QoS and/or integrity (e.g., utilize SL-based positioning or RAT-independent positioning techniques if UL-based, or DL-based positioning is indicated to suffer from positioning QoS), at least for the certain time, distance, or other thresholds associated with the reduced positioning QoS and/or integrity (i.e., the time, distance, or other thresholds indicated in the first message).

Other general elements of the mechanisms according to the subject disclosure include the selection of UEs for congestion/positioning QoS indication. That is, to avoid unsolicited indications on congestion/positioning QoS sent from UEs to the network (which may create additional congestion on the network), one or more of the following are utilized.

In a first variant, the network may select and indicate one or more UE(s) (or group of UEs) in a certain area for reporting network congestion and/or positioning QoS. The selection of the one or more UE(s) to report network congestion may be made based on the minimum overhead caused by congestion reporting. For example, the UE(s) with dedicated UL grants may be selected to use such UL resources to report congestion. In such case, LMF may issue a new information element (IE) via NRPPa as part of the NG-RAN procedures that requests from the gNB that serves the area where the congestion is identified to identify the one or more UE(s) with dedicated UL resources. The LMF may then request from the one or more UE(s) to report network congestion and/or positioning QoS.

In a second variant, the selection of the one or more UE(s) may be made based on minimum SL resource overhead. In this case, the LMF may select the UE that is already issuing a SL broadcast message, such that there is no additional overhead on SL broadcast caused by the UE reporting congestion to other peer UEs over SL.

In a third variant, the selection of the one or more UE(s) may be made based on the current position of the UEs (considering that this information is still available and not yet corrupted). In some examples, clustering algorithms (e.g., k-means clustering) may be used that allow dividing the congested area into a certain number of sub-areas (e.g., k clusters in case of the k-means clustering), and then one UE per sub-area is selected (e.g., for k-means clustering, for each of the k clusters, the UE closest to the cluster centroid or cluster center of the respective cluster may be selected). In some examples, the congested area may be divided per TRP or per gNB, etc. In other examples, dividing the congested area may be made per hot-spot of users (e.g., determined by user density and coarse locations).

When the UE(s) provides the congestion/positioning QoS indication to the network, the UE(s) may also announce the congestion/positioning QoS indication on SL (via broadcast message). This allows other UEs on the SL to receive the congestion/positioning QoS indication such that these UEs are also informed about experiencing network congestion back off. The indication may also be based on receiving an acknowledgement (ACK) from the network, i.e., when UE sends an indication to the network, the network may send a DL broadcast ACK message or a DL multicast ACK message, so that the other UEs receiving this ACK do not also send another indication to the network.

Now, exemplary methods of controlling of a positioning service according to some embodiments of the subject disclosure will be described.

FIG. 9 illustrates a flow chart of a method 900 of controlling a positioning service according to some embodiments. The method 900 is performed by a user device (e.g., user equipment (UE)), or by an apparatus for use in a user device. For example, the user device may be represented by any one of the wireless devices, such as UEs 110A-110B of the wireless network 100 as described above with reference to FIG. 1, or the wireless device 110 as described above with reference to FIG. 2.

The user device 110 is connected to, and served by, the network 100. More specifically, the user device 110 is located in an area (i.e., a cell 115) served by the base station (e.g., gNBs 120A, 120B) and uses services such as a positioning service related to a positioning technique. The positioning technique may be provided or supported by the network 100. For example, the network 100 may include a network node (e.g., network node 130) or network function, providing a Location Management Function (LMF). The LMF is the network entity in the 5G Core Network (5GC) supporting the functionality such as location determination for a UE, downlink location measurements or a location estimate from the UE, uplink location measurements from the NG RAN, and non-UE associated assistance data from the NG RAN.

For example, the positioning technique may comprise a RAT-dependent positioning technique (e.g., DL TDoA, AoD, UL TDoA, Multi RTT, SL TDoA, SL RTT, etc.).

At block 920, the user device receives a first message (e.g., assistance data) from the network. The first message indicates, or is related to, a degradation of a positioning technique (also referred to as first positioning technique) related to the positioning service. The degradation of the positioning technique may be caused by a congestion in the network, e.g., due to a (very high) number of requests related to the positioning technique. Other reasons which may cause the degradation include jamming, attacking, etc. the network. The first message may be received from the network via broadcast, multicast, or dedicated unicast signaling. According to some examples, which will be described in more detail below, the first message may be received from a network node (e.g., the LMF) of the network. In this case, the first message is received via the LPP protocol. According to some other examples, which will also be described in more detail below, the user device may receive the first message from the base station (e.g., the gNB) serving the cell. In this case, the first message is received via RRC.

In some examples, the first message comprises at least one of an indication indicating that one or more positioning QoS requirement(s) for the positioning technique are not guaranteed, an indication (e.g., a warning) indicating that a limited QoS can be guaranteed, and an indication indicating that one or more positioning integrity requirement(s) for the positioning service are not guaranteed. Examples of the positioning QoS requirement(s) comprise at least one of a latency, a time to alert (TTA), or an accuracy. Examples of the positioning integrity requirement(s) comprise one or more KPIs. The indication may also further indicate that the positioning QoS requirement(s)/the positioning integrity requirement(s) are not guaranteed for a specified area and/or a specified time. The specified area may relate to one or more cells (e.g., the cell serving the user device), one or more transmission and reception point(s) (TRPs), one or more road side units (RSUs), and/or an out-of-coverage zone (e.g., a neighboring cell). In some examples, the specified area may be represented by one or more identifiers of the cells, the TRPs and/or the RSUs and may be defined as a list. In some examples, the indication (i.e., the warning) indicating that a limited QoS can be guaranteed may also indicate that a certain accuracy or latency within a certain range, or above/below threshold can be guaranteed.

In response to receiving the first message from the network, the user device controls the positioning service based on the first message at block 930. Based on the first message, the user device is informed about the degradation of the positioning technique. That is, the user device is informed about that the positioning technique is not available or at least does not provide reliable positioning results because positioning QoS requirement(s) and/or positioning integrity requirement(s) for the positioning technique or the positioning service cannot be guaranteed, e.g., in a certain area (e.g., the cell) and/or for a certain time (e.g., 10 minutes).

Block 930 may further comprise that the user device determines/decides based on the first message whether to control the positioning service or not. For example, the user device may determine/decide that controlling the positioning service is not required. In this case, the user device accepts the (possible) degradation of the positioning technique or possibly stops using the positioning service related to the positioning technique in the certain area and/or for the certain time. If the user device however determines/decides to control the positioning service, the user device uses information from the first message and controls the positioning service in accordance with the information.

Examples of controlling the positioning service include deferring sending further positioning requests for the positioning service to the network or reducing a number of positioning requests for the positioning service to be sent to the network (block 934). That is, the positioning service is controlled based on the first message or the information derived from the first message to defer transmitting a positioning request transmission related to the positioning technique or reduce a number of positioning request transmission for the positioning service (i.e., a number of positioning request transmissions related to the positioning technique). The positioning service may also be controlled to defer exchanging positioning related messages related to the positioning technique or reduce a number of exchanging positioning related messages for the positioning service (i.e., a number of exchanging positioning related messages related to the positioning technique).

In another example, the user device may control the positioning service to switch to an alternative positioning technique (block 936). In this case, first message may include recommendation information related to one or more positioning techniques. The recommendation information may indicate at least one positioning technique that is not available (e.g., in a certain area and/or for a certain time). Additionally, or alternatively, the recommendation information may indicate at least one positioning technique that is available (e.g., in a certain area and/or for a certain time). The recommendation information may also indicate one or more alternative positioning techniques (also referred to as second positioning techniques) which may be used by the positioning service of the user device. The user device may select from the one or more alternative positioning techniques. For example, the user device may select one of the alternative positioning techniques that is supported by the user device. That is, the first message received by the user device comprises recommendations related to one or more positioning techniques, thereby indicating, to the user device, positioning techniques which can be used without being affected by the degradation and recommending to switch to one of the alternative positioning techniques to avoid impact related to positioning due to the degradation. If the first message comprises the recommendation information and/or an indication of the one or more alternative positioning techniques, the user device may determine whether one of the alternative positioning techniques is supported. If the user device determines that more than one of the alternative positioning techniques is supported, the user device may then determine/decide which of the supported alternative positioning techniques to select based on certain factors (e.g., reliability, accuracy, processing/signaling requirements, etc.). In response to selecting, the user device controls the positioning service to switch to the selected alternative positioning technique (block 936).

Examples of alternative positioning techniques comprise SL-based positioning services and/or RAT-independent positioning services.

In some examples, the method 900 illustrated in FIG. 9 may further comprise that the user device determines congestion status information related to a congestion, eventually causing the degradation of the positioning technique and sends a second message including the congestion status information to the network (block 910). That is, the user device sends a corresponding indication that the positioning technique may be subject to the degradation. For example, the congestion status information indicates one or more network performance metrics related to congestion.

In block 910, the user device determines the congestion status information (e.g., a network traffic congestion) on at least one of SL, UL, or DL by determining that the positioning QoS and/or positioning integrity is not satisfied. In some examples, the user device may determine the positioning QoS/the positioning integrity for positioning on at least one of SL, UL, or DL (e.g., for the positioning technique used by the positioning service of the user device) for a number of positioning requests (i.e., a number exceeding a predetermined threshold). The reason for not satisfying may relate to congestion on at least one of SL, UL, or DL avoiding transmission of positioning-related signals or messages (i.e., positioning requests) in time.

For example, the (network traffic) congestion may concern information about a congestion status with respect to one or more network performance metrics. Exemplary network performance metrics comprise at least one of delay, throughput, latency, packet loss rate, a number of user devices per certain area (e.g., cell), a number of occupied radio resources, measured interference over resources, occurrence of pre-defined events. The exemplary network performance metrics may also be associated with the positioning technique related to the positioning service of the user device or the positioning service and specifically concerns a number of user devices requesting the positioning technique within a certain time period and/or within the certain area (e.g., cell), and/or an average latency of positioning requests in the certain time period and/or the certain area.

As already described above, the user device may determine the congestion status information by applying one or more predetermined thresholds and determining whether, e.g., one or more of the network performance metrics exceeds the predetermined thresholds (i.e., the predetermined threshold corresponding to one of the network performance metrics). The one or more thresholds may be configured in the user device by the network. For example, the user device may receive a configuration including the one or more thresholds, or an indication relating to the one or more thresholds, from the network.

In block 910, the user device sends the second message to the network in response to the determination. The second message may be sent to the gNB (e.g., via RRC) or to the LMF (via LPP protocol).

In some examples, the user device may send the second message indicating that the positioning technique may be subject to the degradation to the network (block 910) unsolicited or in response to receiving a corresponding request from the network. That is, the user device may receive a request for information about congestion from the network. In some examples, the request may be explicit (e.g., by including the request in the configuration received from the network) or implicit (e.g., by receiving the configuration and/or the one or more thresholds).

The method 900 illustrated in FIG. 9 achieves high QoS availability and continuity for positioning and/or allows offloading traffic on at least one of UL, DL, or SL dynamically depending on congestion/load conditions in the network. Essentially, the user device(s) is enabled to defer from future positioning requests and/or switch to a recommended positioning technique(s) based on the first message (i.e., the assistance data, the warning) received from the network, thereby avoiding that the user device(s) suffer from positioning QoS (e.g., network latency) and helping to offload congested traffic.

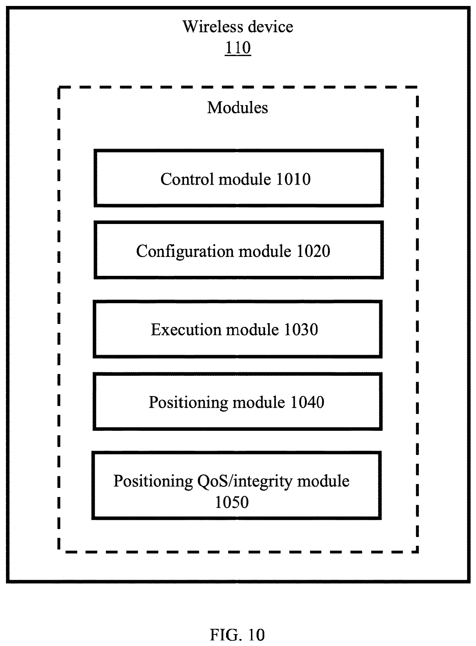

According to some embodiments, the method 900 of FIG. 9 may be performed by a wireless device (e.g., a user device or UE), or by an apparatus for use in a wireless device. Referring to FIG. 10, in some embodiments, the wireless device 110 may comprise a control module 1010 for receiving a first message (e.g., assistance data) from the network and a control module 1010 for controlling the positioning service in accordance with the first message. The wireless device 110 may further comprise a configuration module 1020 for configuring the wireless device 110 based on information (e.g., a configuration) received from the network, an execution module 1030 for executing the positioning service, a positioning module 1040 for performing positioning measurements and calculating a position, and/or a positioning QoS/integrity module 1050 for monitoring and determining the positioning QoS/integrity associated with the positioning measurements. The configuration module 1020 may also be used to configure the positioning service used by the wireless device 110 based on information in the first message and/or a configuration received from the network.

FIG. 11 illustrates a flow chart of a method 1100 of controlling a positioning service according to some embodiments. The method 1100 is performed by a network, or by an apparatus for use in a network. More specifically, the method 1100 may be performed by a network node or network function (e.g., gNB, LMF). For example, the network node may be represented by any one of the networks nodes, such as gNBs 120A-120B or network node 130 of the wireless network 100 as described above with reference to FIG. 1, or the radio access node 120 or the network node 130 as described above with reference to FIG. 3.

The user device 110 is connected to, and served by, the network 100. More specifically, the user device 110 is located in an area (i.e., a cell 115) served by the base station (e.g., gNBs 120A, 120B) and uses services such as a positioning service related to a positioning technique. The positioning technique may be supported or served by the network 100. For example, the network 100 may include a network node (e.g., network node 130) or network function, providing a Location Management Function (LMF). The LMF is the network entity in the 5G Core Network (5GC) supporting the functionality such as location determination for a UE, downlink location measurements or a location estimate from the UE, uplink location measurements from the NG RAN, and non-UE associated assistance data from the NG RAN.

For example, the positioning technique may comprise a RAT-dependent positioning service (e.g., DL TDoA, AoD, UL TDoA, Multi RTT, SL TDoA, SL RTT, etc.).

At block 1120, the network determines a degradation of the positioning technique (also referred to as first positioning technique). The degradation of the positioning technique may be caused by a congestion in the network, e.g., due to a (very high) number of requests related to the positioning technique. Other reasons which may cause the degradation include jamming, attacking, etc. the network. The congestion may be on one or more of SL, UL, and DL.

In some examples, the network may observe the positioning technique (block 1110) and based on results of the observation, determine that the positioning technique may be subject to the degradation (block 1120). The network may, for example, observe that positioning QoS cannot be met for an amount and/or rate of positioning requests in a certain area (e.g., the cell), observe that one or more positioning integrity KPI are not met, and observe that a number of rejected messages and/or error messages related to the positioning technique exceeds a predetermined threshold.

In some examples, the determination in block 1120 may also be based on an indication that the positioning technique may be subject to the degradation, received from the user device with a second message (block 1110).

The second message may first be sent by the user device to a base station serving the cell (i.e., gNB), e.g., via RRC and then from the base station to the LMF, e.g., via NRPPa. The second message may also be sent by the user device directly to the LMF, e.g., via LPP. In some examples, the user device may send the indication unsolicited. In other examples, the network (i.e., the LMF and/or gNB) may request the user device to indicate that the positioning technique may be subject to the degradation. Thus, the second message is sent by the user device in response to receiving the request from the network. The request may be explicit (e.g., by including the request in the configuration received from the network) or implicit (e.g., by receiving the configuration and/or the one or more thresholds). In some examples, the network may select one or more user devices from among a plurality of user devices (e.g., in a certain area) to provide the indication that the positioning technique may be subject to the degradation and informs the selected user device(s) to provide the indication. That is, the selected user device(s) may be requested to provide the second message. The selection of the one or more user device(s) by the network may be based on certain (pre-)defined factors, including a minimum overhead caused by providing the indication, a minimum SL resource overhead, a current position of the user device, etc.

As already described above with reference to FIG. 9, the user device may determine a congestion, eventually causing the degradation of the positioning technique and may then send the second message indicating that the positioning technique may be subject to the degradation to the network. That is, the second message may indicate that a network traffic congestion may cause the degradation of the positioning technique. For example, the second message and/or network traffic congestion may comprise information about a congestion status with respect to one or more network performance metrics. Exemplary network performance metrics comprise at least one of delay, throughput, latency, packet loss rate, a number of user devices per certain area (e.g., cell), a number of occupied radio resources, measured interference over resources, occurrence of pre-defined events. The exemplary network performance metrics may also be associated with one or more positioning techniques and/or one or more positioning services including the positioning service used by the user device and specifically concerns a number of user devices requesting the positioning technique within a certain time period and/or within the certain area (e.g., cell), and/or an average latency of positioning requests for the positioning technique in the certain time period and/or the certain area.

As already described with reference to FIG. 9, the user device may determine the congestion based on one or more predetermined thresholds. In this case, the second message may indicate that one or more of the exemplary network performance metrics is below/above the predetermined thresholds. In some examples, the network may configure the one or more thresholds by sending a configuration including the one or more thresholds to the user device.

In response to determining the degradation of the positioning service (block 1120), the network transmits a first message (e.g., assistance data) related to the degradation of the positioning technique towards the user device, in block 1130. The first message instructs the user device to control the positioning service based on the first message, as described above with reference to FIG. 9. Examples of controlling include the user device to defer sending positioning requests for the positioning technique, reducing a number of positioning requests for the positioning technique, or switching to an alternative positioning technique.

The first message may be sent by the network via broadcast, multicast, or dedicated unicast signaling. According to some examples, the first message may be sent by the LMF to the user device via LPP directly to the user device, or first to the base station (e.g., gNB) via NRPPa and then to the user device via RRC.

In some examples, the first message comprises at least one of an indication indicating that one or more positioning QoS requirement(s) for the positioning technique are not guaranteed, an indication (e.g., a warning) indicating that a limited QoS can be guaranteed, and/or an indication indicating that one or more positioning integrity requirement(s) for the positioning technique are not guaranteed. Examples of the positioning QoS requirement(s) comprise at least one of a latency, a time to alert (TTA), or accuracy. Examples of the positioning integrity requirement(s) comprise one or more KPIs. The indication may also further indicate that the positioning QoS requirement(s)/the positioning integrity requirement(s) are not guaranteed for a specified area and/or a specified time. The specified area may relate to one or more cells (e.g., the cell serving the user device and/or neighboring cells), one or more transmission and reception point(s) (TRPs), one or more road side units (RSUs), and/or an out-of-coverage zone (e.g., a neighboring cell). In some examples, the specified area may be represented by one or more identifiers of the cells, the TRPs and/or the RSUs and may be defined as a list. In some examples, the indication (i.e., the warning) indicating that a limited QoS can be guaranteed may also indicate that a certain accuracy or latency within a certain range, or above/below threshold can be guaranteed.

In some examples, to instruct the user device to switch to an alternative positioning technique, the first message may include recommendation information indicating at least one positioning technique that is not available and/or at least one positioning technique that is available (e.g., in a certain area, and/or for a certain time). Additionally, or alternatively, the first message may indicate an alternative positioning technique (also referred to as a second positioning technique) to which the user device may switch. That is, the first message comprises recommendations for the one or more alternative positioning techniques to indicate to the user device that switching to one of these alternative positioning techniques avoids any impact related to positioning due to the degradation of the positioning technique. The recommendations/indications of the one or more alternative positioning techniques also indicate to the user device to determine whether one of the one or more alternative positioning techniques is supported, select one of the supported alternative positioning techniques, and control the positioning service of the user device to switch to the selected alternative positioning technique.

Examples of alternative positioning techniques comprise SL-based positioning services and/or RAT-independent positioning services.

The method 1100 illustrated in FIG. 11 achieves high QoS availability and continuity for positioning and/or allows offloading traffic on at least one of UL, DL, or SL dynamically depending on congestion/load conditions in the network. Essentially, the network enables the user device(s) to defer from future positioning requests and/or switch to recommended positioning technique(s) based on the first message (e.g., assistance data, the warning, etc.), thereby avoiding that the user device(s) suffer from positioning QoS (e.g., network latency) and helping to offload congested traffic.

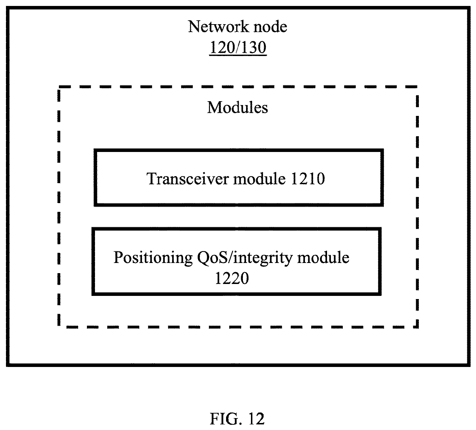

Referring to FIG. 12, in some embodiments, the radio access node 120 or the network node 130 can comprise a transceiver module 1210 for transmitting the first message (e.g., assistance data) related to the degradation of the positioning technique related to the positioning service, and a positioning QoS/integrity module 1220 for determining the degradation of the positioning technique. The transceiver module 1210 may further transmit and receive positioning-related messages, such as capability requests/responses, positioning information and reports. The positioning QoS/integrity module 1220 may further determine integrity-related parameter(s) associated with a user device and determine the integrity associated with an estimated position of the user device.

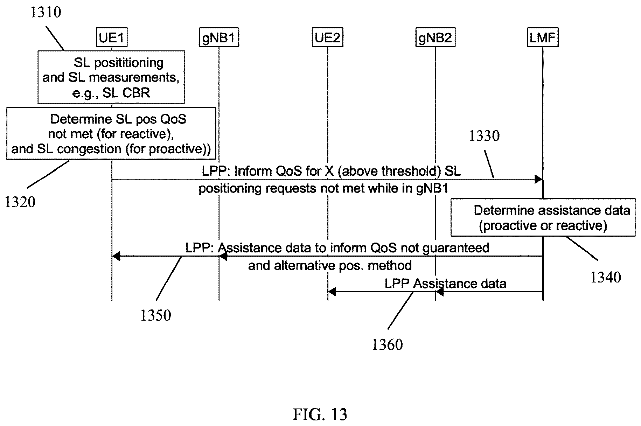

Turning now to FIGS. 13 to 16, the methods of controlling a positioning service according to some embodiments will be described with reference to exemplary message sequence diagrams.

The exemplary message sequence diagrams illustrate the message exchanged between, and operations performed by, user devices/network nodes of the network. For example, the network (e.g., a 5G network or beyond) may comprise the example wireless network as illustrated in FIG. 1. The network may also comprise one or more network nodes (e.g., one or more exemplary network nodes as illustrated in FIG. 3, or an apparatus for use in such exemplary network nodes) and one or more wireless devices (e.g., one or more user devices such as UE(s) as illustrated in FIG. 2, or an apparatus for use in such user devices).

More specifically, in the exemplary message sequence diagrams, the network comprises a core network entity (e.g., LMF) providing one or more positioning techniques or positioning services related to positioning techniques and being connected to one or more base stations (e.g., gNB1, gNB2), serving at least one cell. Further, one or more user devices (e.g., UE1, UE2) may be located in the at least one cell and being served by the one or more base stations (e.g., gNB1, gNB2).

FIG. 13 illustrates an exemplary message sequence diagram of a method of controlling a positioning service according to some embodiments of the subject disclosure. More specifically, the exemplary message sequence diagram of FIG. 13 concern (proactive/reactive) warning by LMF upon indication of SL conditions regarding network congestion and/or positioning QoS coming from UE using LPP protocol.

As illustrated in FIG. 13, UE1 determines a network traffic congestion causing degradation of the positioning technique (i.e., the positioning technique provided by LMF and used by UE1) (steps 1310 and 1320). For example, UE1 may use a positioning service via SL and performs SL positioning and SL measuring (e.g., SL CBR) by sending and receiving positioning requests/responses (step 1310). Based thereon, UE1 may determine that SL positioning QoS is not met (e.g., SL positioning QoS does not met a predetermined threshold) and that SL congestion exists, e.g., based on an indication received from the network or other UE(s) (step 1320).

In response to determining the network traffic congestion, UE1 informs the network about the network traffic congestion (step 1330). For example, UE1 informs LMF that positioning QoS for a number of SL positioning requests (i.e., a number below/above a predetermined threshold) is not met while UE1 is served by gNB1. Here, UE1 may inform LMF by sending the second message via LPP.

Based on the indication on or the information about the network traffic congestion, the network (i.e., LMF) determines the first message (e.g, assistance data) to be provided to base station(s) and/or the user device(s) (step 1340). The first message indicates the degradation of the positioning technique and may also recommend (or indicate) one or more alternative positioning techniques which are not degraded, and which may be used instead of the degraded positioning technique.

The first message is transmitted to UE1 directly (e.g., via LPP) to inform UE1 that positioning QoS is not guaranteed and to recommend alternative positioning techniques (step 1350). The first message may also be sent to other user device(s) (e.g., UE2) via LPP (step 1360).

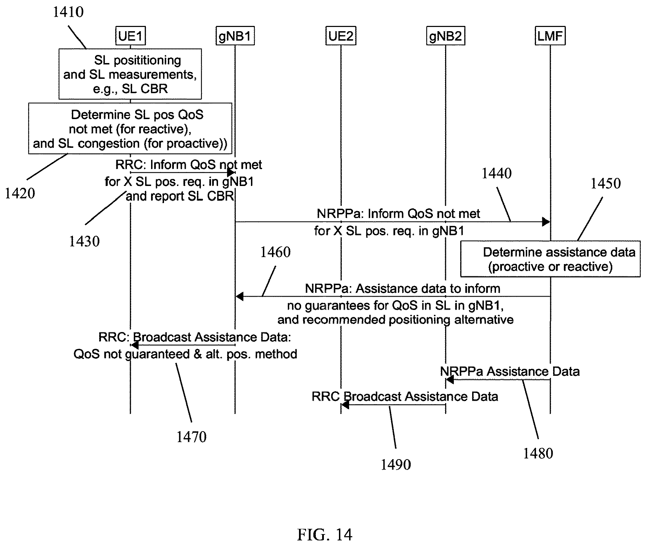

FIG. 14 illustrates another exemplary message sequence diagram of a method of controlling a positioning service according to some embodiments of the subject disclosure. More specifically, the exemplary message sequence diagram of FIG. 14 concern (proactive/reactive) warning by LMF upon indication of SL conditions regarding network congestion and/or positioning QoS coming from UE using NRPPa and RRC protocols.

As already described with reference to FIG. 13, UE1 determines a network traffic congestion causing degradation of the positioning technique (steps 1410 and 1420). However, contrary to informing LMF directly, UE1 informs the (serving) base station gNB 1 about the network traffic congestion (step 1430). For example, UE1 informs gNB1 that positioning QoS for a number of SL positioning requests (i.e., a number below/above a predetermined threshold) is not met in the area served by gNB1. Here, UE1 may inform gNB1 by sending the second message via RRC. In addition, UE1 may also report SL CBR to gNB1.

In response to receiving the information from UE1, gNB1 may send or forward a corresponding information to LMF (step 1440). For example, gNB1 informs LMF that positioning QoS for a number of SL positioning requests (i.e., a number below/above a predetermined threshold) is not met in the area served by gNB1. The information is sent via NRPPa.

As already described with reference to FIG. 13, the network (i.e., LMF) determines the first message (e.g., assistance data) to be provided to base station(s) and/or the user device(s) (step 1450). The first message indicates the degradation of the positioning technique and may also recommend/indicate alternative positioning techniques which are not degraded, and which may be used instead of the degraded positioning technique.

The first message is transmitted to gNB1 (e.g., via NRPPa) to inform that positioning QoS is not guaranteed and to recommend alternative positioning techniques (step 1460). The first message is then sent (e.g., broadcast) to UE1 (e.g., via RRC) (step 1470). The first message may also be sent to other base station(s) (e.g., gNB2) via NRPPa (step 1480) and then broadcast to other user device(s) (e.g., UE2) via RRC (step 1490).

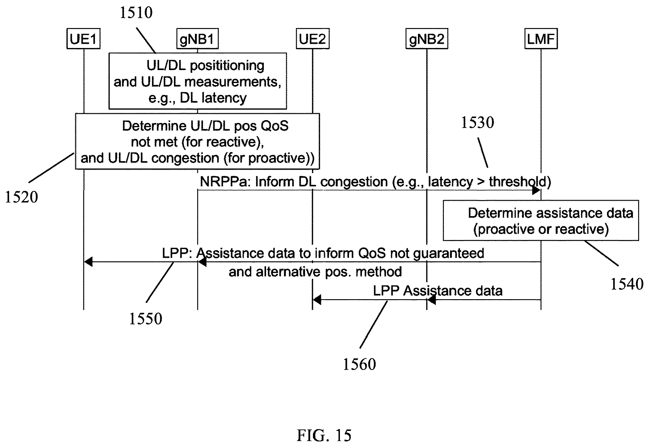

FIG. 15 illustrates a further exemplary message sequence diagram of a method of controlling a positioning service according to some embodiments of the subject disclosure. More specifically, the exemplary message sequence diagram of FIG. 15 concern (proactive/reactive) warning by LMF upon indication of UL/DL network congestion and/or positioning QoS coming from gNB, wherein the UEs are informed using LPP protocol.

As illustrated in FIG. 15, a base station (e.g., gNB1) determines a network traffic congestion causing degradation of the positioning technique (i.e., the positioning technique provided by LMF and used by UE1) (steps 1510 and 1520). For example, gNB1 may perform positioning on UL and/or DL and measuring on UL and/or DL (e.g., DL latency) based on positioning requests/responses handled by the gNB1 (step 1510). Based thereon, gNB1 may determine that positioning QoS on UL and/or DL is not met (e.g., positioning QoS on UL and/or DL does not met a predetermined threshold) and that congestion on UL and/or DL exists, e.g., based on an indication received from the network or other UE(s) (step 1520).

In response to determining the network traffic congestion, gNB1 informs the network about the network traffic congestion (step 1530). For example, gNB1 informs LMF about congestion on UL and/or DL (e.g., DL latency exceeds a predetermined threshold). Here, gNB 1 may inform LMF via NRPPa.

As already described with reference to FIG. 13, the network (i.e., LMF) determines the first message (e.g., assistance data) to be provided to base station(s) and/or the user device(s) (step 1540). The first message indicates the degradation of the positioning technique and may also recommend/indicate alternative positioning techniques which are not degraded, and which may be used instead of the degraded positioning technique.

The first message is transmitted to UE1 directly (e.g., via LPP) to inform UE1 that positioning QoS is not guaranteed and to recommend alternative positioning techniques (step 1550). The first message may also be sent to other user device(s) (e.g., UE2) via LPP (step 1560).

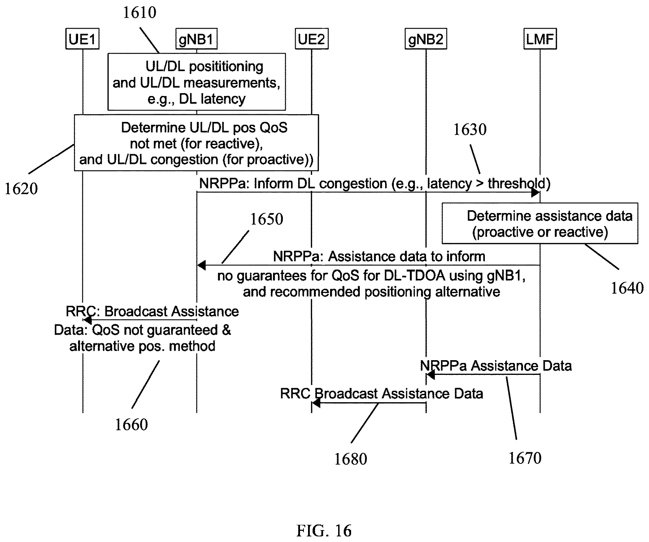

FIG. 16 illustrates yet another exemplary message sequence diagram of a method of controlling a positioning service according to some embodiments of the subject disclosure. More specifically, the exemplary message sequence diagram of FIG. 16 concern (proactive/reactive) warning by LMF upon indication of network congestion (e.g., on UL and/or DL) and/or positioning QoS coming from gNB, wherein the UEs are informed using NRPPa and RRC protocols.

As already described with reference to FIG. 15, the base station (e.g., gNB1) determines a network traffic congestion causing degradation of the positioning technique (steps 1610 and 1620). For example, gNB1 may perform positioning on UL and/or DL and measuring on UL and/or DL (e.g., DL latency) based on positioning requests/responses handled by the gNB1 (step 1610) and determine that positioning QoS on UL and/or DL is not met (e.g., positioning QoS does not met a predetermined threshold) and that congestion on UL and/or DL exists, e.g., based on an indication received from the network or other UE(s) (step 1620). In response to determining the network traffic congestion, gNB 1 informs the network about the network traffic congestion (step 1630). For example, gNB1 informs LMF about congestion on UL and/or DL (e.g., DL latency exceeds a predetermined threshold) via NRPPa.

As already described with reference to FIG. 13, the network (i.e., LMF) determines the first message (e.g., assistance data) to be provided to base station(s) and/or the user device(s) (step 1640). The first message indicates the degradation of the positioning technique and may also recommend/indicate alternative positioning techniques which are not degraded, and which may be used instead of the degraded positioning technique.

The first message is transmitted to gNB1 (e.g., via NRPPa) to inform that positioning QoS is not guaranteed for DL-TDoA (for example) using gNB1 and to recommend alternative positioning techniques (step 1650). The first message is then sent (e.g., broadcast) to UE1 (e.g., via RRC) (step 1660). The first message may also be sent to other base station(s) (e.g., gNB2) via NRPPa (step 1670) and then broadcast to other user device(s) (e.g., UE2) via RRC (step 1680).

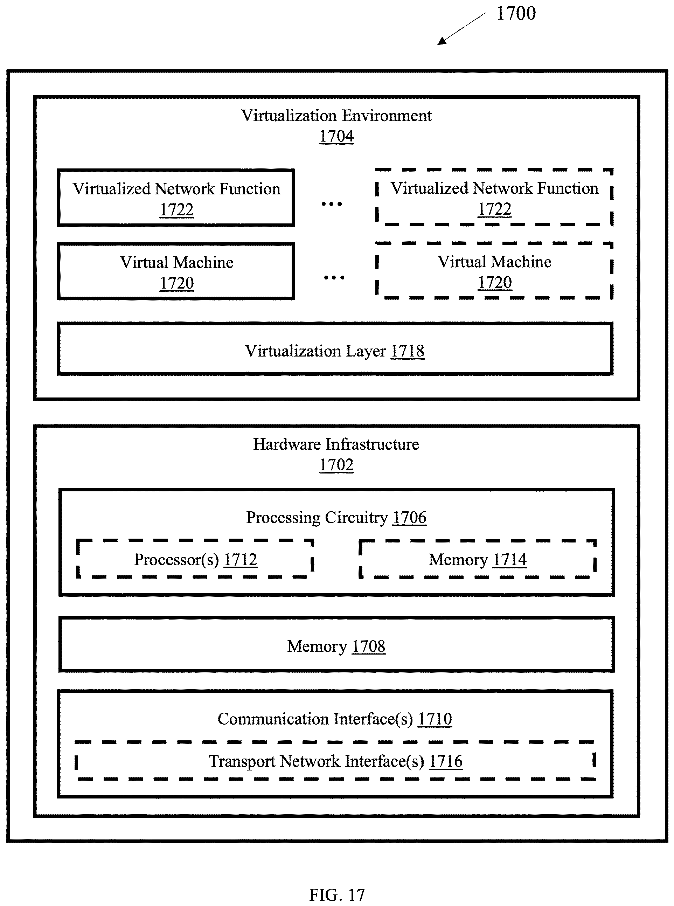

Finally, turning now to Figure 17, some network nodes (e.g., UEs 110, radio access nodes 120, core network nodes 130, etc.) in the wireless communication network 100 may be partially or even entirely virtualized. As a virtualized entity, some or all the functions of a given network node are implemented as one or more virtual network functions (VNFs) running in virtual machines (VMs) hosted on a typically generic processing node 1700 (or server).

Processing node 1700 generally comprises a hardware infrastructure 1702 supporting a virtualization environment 1704.

The hardware infrastructure 1702 generally comprises processing circuitry 1706, a memory 1708, and communication interface(s) 1710.

Processing circuitry 1706 typically provides overall control of the hardware infrastructure 1702 of the virtualized processing node 1700. Hence, processing circuitry 1706 is generally responsible for the various functions of the hardware infrastructure 1702 either directly or indirectly via one or more other components of the processing node 1700 (e.g., sending or receiving messages via the communication interface 1710). The processing circuitry 1706 is also responsible for enabling, supporting, and managing the virtualization environment 1704 in which the various VNFs are run. The processing circuitry 1706 may include any suitable combination of hardware to enable the hardware infrastructure 1702 of the virtualized processing node 1700 to perform its functions.

In some embodiments, the processing circuitry 1706 may comprise at least one processor 1712 and at least one memory 1714. Examples of processor 1712 include, but are not limited to, a central processing unit (CPU), a graphical processing unit (GPU), and other forms of processing unit. Examples of memory 1714 include, but are not limited to, Random Access Memory (RAM) and Read Only Memory (ROM). When processing circuitry 1706 comprises memory 1714, memory 1714 is generally configured to store instructions or codes executable by processor 1712, and possibly operational data. Processor 1712 is then configured to execute the stored instructions and possibly create, transform, or otherwise manipulate data to enable the hardware infrastructure 1702 of the virtualized processing node 1700 to perform its functions.

Additionally, or alternatively, in some embodiments, the processing circuity 1706 may comprise, or further comprise, one or more application-specific integrated circuits (ASICs), one or more complex programmable logic device (CPLDs), one or more fieldprogrammable gate arrays (FPGAs), or other forms of application-specific and/or programmable circuitry. When the processing circuitry 1706 comprises application-specific and/or programmable circuitry (e.g., ASICs, FPGAs), the hardware infrastructure 1702 of the virtualized processing node 1700 may perform its functions without the need for instructions or codes as the necessary instructions may already be hardwired or preprogrammed into processing circuitry 1706. Understandably, processing circuitry 1706 may comprise a combination of processor(s) 1712, memory(ies) 1714, and other application-specific and/or programmable circuitry.

The communication interface(s) 1710 enable the virtualized processing node 1700 to send messages to and receive messages from other network nodes (e.g., radio network nodes, other core network nodes, servers, etc.). In that sense, the communication interface 1710 generally comprises the necessary hardware and software to process messages received from the processing circuitry 1706 to be sent by the virtualized processing node 1700 into a format appropriate for the underlying transport network and, conversely, to process messages received from other network nodes over the underlying transport network into a format appropriate for the processing circuitry 1706. Hence, communication interface 1710 may comprise appropriate hardware, such as transport network interface(s) 1716 (e.g., port, modem, network interface card, etc.), and software, including protocol conversion and data processing capabilities, to communicate with other network nodes.

The virtualization environment 1704 is enabled by instructions or codes stored on memory 1708 and/or memory 1714. The virtualization environment 1704 generally comprises a virtualization layer 1718 (also referred to as a hypervisor), at least one virtual machine 1720, and at least one VNF 1722. The functions of the processing node 1700 may be implemented by one or more VNFs 1722.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles can be applied in relation to other networks and communication systems where enforcing fast connection re-establishment is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic, or any combination thereof. Some aspects of the subject disclosure may be implemented in hardware, while other aspects may be implemented in firmware or software which may be executed by a controller, microprocessor, or other computing device, although the subject disclosure is not limited thereto. While various aspects of the subject disclosure may be illustrated and described as block diagrams, flow charts, or using some other pictorial representation, it is well understood that these blocks, apparatus, systems, techniques, or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer- executable components which, when the program is run, are configured to carry out embodiments. The one or more computer-executable components may be at least one software code or portions of it.

Further in this regard it should be noted that any blocks of the logic flow as in the figures may represent program steps, or interconnected logic circuits, blocks and functions, or a combination of program steps and logic circuits, blocks, and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductorbased memory devices, magnetic memory devices and systems, optical memory devices and systems, fixed memory, and removable memory. The data processors may be of any type suitable to the local technical environment, and may comprise one or more of generalpurpose computers, special purpose computers, microprocessors, digital signal processors (DSPs), application specific integrated circuits (ASICs), FPGA, gate level circuits and processors based on multi-core processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

## Claims

1. A user equipment (110), comprising:
at least one processor; and
at least one memory including computer program code, wherein the computer program code causes the user equipment (110), when executed with the at least one processor, to at least:
receive, from a network node (120/130), a first message related to a degradation of a first positioning technique related to a positioning service, the first message indicating a second positioning technique; and
control the positioning service based on the first message.

2. A network node (120/130), comprising:
at least one processor; and
at least one memory including computer program code, wherein the computer program code causes the network node (120/130), when executed with the at least one processor, to at least:
determine a degradation of a first positioning technique related to a positioning service; and
transmit, towards a user equipment (110), a first message related to a degradation of the first positioning technique,
wherein the first message indicates a second positioning technique, and wherein the first message triggers the user equipment (110) to control the positioning service based on the first message.

3. The user equipment (110) of claim 1 or the network node (120/130) of claim 2, wherein the first message further comprises at least one of an indication indicating that a positioning quality of service, QoS, requirement for the first positioning technique is not guaranteed or an indication indicating that a positioning integrity requirement for the positioning service is not guaranteed.

4. The user equipment (110) or the network node (120/130) of claim 3, wherein the indication further indicates that the positioning QoS requirement is not guaranteed for at least one of a specified area or a specified time.

5. The user equipment (110) or the network node (120/130) of any of claims 1 to 4, wherein the first message further includes recommendation information indicating at least one positioning technique that is not available.

6. The user equipment (110) or the network node (120/130) of any of claims 1 to 4, wherein the first message further includes recommendation information indicating at least one positioning technique to be available.

7. A method for controlling a positioning service, comprising:
receiving (920), by a user equipment (110) from a network node (120/130), a first message related to a degradation of a first positioning technique related to a positioning service, the first message indicating a second positioning technique; and
controlling (936), by the user equipment (110), the positioning service based on the first message.

8. A method for controlling a positioning service by a network node (120/130), comprising:
determining (1120) a degradation of a first positioning technique related to a positioning service; and
transmitting (1130), towards a user equipment (110), a first message related to the degradation of the first positioning technique,
wherein the first message indicates a second positioning technique, and wherein the first message triggers the user equipment (110) to control the positioning service based on the first message.

9. The method of claim 7 or 8, wherein the first message further comprises at least one of an indication indicating that a positioning quality of service, QoS, requirement for the first positioning technique is not guaranteed or an indication indicating that a positioning integrity requirement for the positioning service is not guaranteed.

10. The method of claim 9, wherein the indication further indicates that the positioning QoS requirement is not guaranteed for at least one of a specified area or a specified time.

11. The method of any of claims 7 to 10, wherein the first message further includes recommendation information indicating at least one positioning technique that is not available.

12. The method of any of claims 7 to 10, wherein the first message further includes recommendation information indicating at least one positioning technique to be available.

13. A computer program product comprising program instructions stored on a computer readable medium, wherein when the program instructions are executed on a computer associated with user equipment (110) of claim 1 or a network node (120/130) of claim 2 causes the associated user equipment (110) or the network node (120/130) to carry out the respective method of claims 7 to 12.

14. A non-transitory computer-readable medium containing the computer program product of claim 13.

## Patentansprüche

1. Teilnehmereinrichtung (110), die Folgendes umfasst,
mindestens einen Prozessor; und
mindestens einen Speicher, der einen Computerprogrammcode beinhaltet, wobei der Computerprogrammcode, wenn er mit dem mindestens einen Prozessor ausgeführt wird, die Teilnehmereinrichtung (110) mindestens zu Folgendem veranlasst:
Empfangen einer ersten Nachricht, die sich auf eine Verschlechterung einer ersten Positionsbestimmungstechnik bezieht, die sich auf einen Positionsbestimmungsdienst von einem Netzwerkknoten (120/130) bezieht, wobei die erste Nachricht eine zweite Positionsbestimmungstechnik anzeigt; und
Steuern des Positionsbestimmungsdienstes auf Basis der ersten Nachricht.

2. Netzwerkknoten (120/130), der Folgendes umfasst:
mindestens einen Prozessor; und
mindestens einen Speicher, der einen Computerprogrammcode beinhaltet, wobei der Computerprogrammcode, wenn er mit dem mindestens einen Prozessor ausgeführt wird, den Netzwerkknoten (120/130) mindestens zu Folgendem veranlasst:
Bestimmen einer Verschlechterung einer ersten Positionsbestimmungstechnik, die sich auf einen Positionsbestimmungsdienst bezieht; und
Übertragen einer ersten Nachricht, die sich auf eine Verschlechterung einer ersten Positionsbestimmungstechnik bezieht, zu einer Teilnehmereinrichtung (110),
wobei die erste Nachricht eine zweite Positionsbestimmungstechnik anzeigt, und wobei die erste Nachricht das Steuern des Positionsbestimmungsdienstes auf Basis der ersten Nachricht durch die Teilnehmereinrichtung (110) auslöst.

3. Teilnehmereinrichtung (110) nach Anspruch 1 oder Netzwerkknoten (120/130) nach Anspruch 2, wobei die erste Nachricht ferner mindestens eines von einer Anzeige, die anzeigt, dass eine Positionsbestimmungsdienstqualitäts(QoS)-Anforderung für die erste Positionsbestimmungstechnik nicht garantiert ist, oder einer Anzeige umfasst, die anzeigt, dass eine Positionsbestimmungsintegritätsanforderung für den Positionsbestimmungsdienst nicht garantiert ist.

4. Teilnehmereinrichtung (110) oder Netzwerkknoten (120/130) nach Anspruch 3, wobei die Anzeige ferner anzeigt, dass die Positionsbestimmungs-QoS-Anforderung für mindestens eines von einem spezifizierten Bereich oder einer spezifizierten Zeit nicht garantiert ist.

5. Teilnehmereinrichtung (110) oder Netzwerkknoten (120/130) nach einem der Ansprüche 1 bis 4, wobei die erste Nachricht ferner Empfehlungsinformationen beinhaltet, die mindestens eine Positionsbestimmungstechnik anzeigen, die nicht verfügbar ist.

6. Teilnehmereinrichtung (110) oder Netzwerkknoten (120/130) nach einem der Ansprüche 1 bis 4, wobei die erste Nachricht ferner Empfehlungsinformationen beinhaltet, die mindestens eine Positionsbestimmungstechnik anzeigen, die verfügbar ist.

7. Verfahren zum Steuern eines Positionsbestimmungsdienstes, das Folgendes umfasst:
Empfangen (920) einer ersten Nachricht, die sich auf eine Verschlechterung einer ersten Positionsbestimmungstechnik bezieht, die sich auf einen Positionsbestimmungsdienst bezieht, durch eine Teilnehmereinrichtung (110) von einem Netzwerkknoten (120/130), wobei die erste Nachricht eine zweite Positionsbestimmungstechnik anzeigt; und
Steuern (936) des Positionsbestimmungsdienstes durch die Teilnehmereinrichtung (110) auf Basis der ersten Nachricht.

8. Verfahren zum Steuern eines Positionsbestimmungsdienstes durch einen Netzwerkknoten (120/130), das Folgendes umfasst:
Bestimmen (1120) einer Verschlechterung einer ersten Positionsbestimmungstechnik, die sich auf einen Positionsbestimmungsdienst bezieht; und
Übertragen (1130) einer ersten Nachricht, die sich auf die Verschlechterung einer ersten Positionsbestimmungstechnik bezieht, zu einer Teilnehmereinrichtung (110),
wobei die erste Nachricht eine zweite Positionsbestimmungstechnik anzeigt, und wobei die erste Nachricht das Steuern des Positionsbestimmungsdienstes auf Basis der ersten Nachricht durch die Teilnehmereinrichtung (110) auslöst.

9. Verfahren nach Anspruch 7 oder 8, wobei die erste Nachricht ferner mindestens eines von einer Anzeige, die anzeigt, dass eine Positionsbestimmungsdienstqualitäts(QoS)-Anforderung für die erste Positionsbestimmungstechnik nicht garantiert ist, oder einer Anzeige umfasst, die anzeigt, dass eine Positionsbestimmungsintegritätsanforderung für den Positionsbestimmungsdienst nicht garantiert ist.

10. Verfahren nach Anspruch 9, wobei die Anzeige ferner anzeigt, dass die Positionsbestimmungs-QoS-Anforderung für mindestens eines von einem spezifizierten Bereich oder einer spezifizierten Zeit nicht garantiert ist.

11. Verfahren nach einem der Ansprüche 7 bis 10, wobei die erste Nachricht ferner Empfehlungsinformationen beinhaltet, die mindestens eine Positionsbestimmungstechnik anzeigen, die nicht verfügbar ist.

12. Verfahren nach einem der Ansprüche 7 bis 10, wobei die erste Nachricht ferner Empfehlungsinformationen beinhaltet, die mindestens eine Positionsbestimmungstechnik anzeigen, die verfügbar ist.

13. Computerprogrammprodukt, das Programmanweisungen umfasst, die auf einem computerlesbaren Medium gespeichert sind, wobei, wenn die Programmanweisungen auf einem Computer ausgeführt werden, der mit einer Teilnehmereinrichtung (110) nach Anspruch 1 oder einem Netzwerkknoten (120/130) nach Anspruch 2 verknüpft ist, die verknüpfte Teilnehmereinrichtung (110) oder den verknüpften Netzwerkknoten (120/130) veranlasst wird, dass entsprechende Verfahren nach einem der Ansprüche 7 bis 12 umzusetzen.

14. Nichttransitorisches computerlesbares Medium, das das Computerprogrammprodukt nach Anspruch 13 enthält.

## Revendications

1. Équipement utilisateur (110) comprenant,
au moins un processeur ; et
au moins une mémoire comportant un code de programme informatique, dans lequel le code de programme informatique amène l'équipement utilisateur (110), lorsqu'il est exécuté avec l'au moins un processeur, à au moins :
recevoir, d'un nœud de réseau (120/130), un premier message lié à une dégradation d'une première technique de positionnement liée à un service de positionnement, le premier message indiquant une deuxième technique de positionnement ; et
contrôler le service de positionnement sur la base du premier message.

2. Nœud de réseau (120/130), comprenant :
au moins un processeur ; et
au moins une mémoire comportant un code de programme informatique, dans lequel le code de programme informatique amène le nœud de réseau (120/130), lorsqu'il est exécuté avec l'au moins un processeur, à au moins :
déterminer une dégradation d'une première technique de positionnement liée à un service de positionnement ; et
transmettre, vers un équipement utilisateur (110), un premier message lié à une dégradation de la première technique de positionnement,
dans lequel le premier message indique une deuxième technique de positionnement, et dans lequel le premier message déclenche l'équipement utilisateur (110) pour qu'il contrôle le service de positionnement sur la base du premier message.

3. Équipement utilisateur (110) selon la revendication 1 ou nœud de réseau (120/130) selon la revendication 2, dans lequel le premier message comprend en outre au moins une parmi une indication indiquant qu'une exigence de qualité de service, QoS, de positionnement pour la première technique de positionnement n'est pas garantie ou une indication indiquant qu'une exigence d'intégrité de positionnement pour le service de positionnement n'est pas garantie.

4. Équipement utilisateur (110) ou nœud de réseau (120/130) selon la revendication 3, dans lequel l'indication indique en outre que l'exigence de QoS de positionnement n'est pas garantie pour au moins un parmi une zone spécifiée ou un temps spécifié.

5. Équipement utilisateur (110) ou nœud de réseau (120/130) selon l'une des revendications 1 à 4, dans lequel le premier message comporte en outre des informations de recommandation indiquant au moins une technique de positionnement qui n'est pas disponible.

6. Équipement utilisateur (110) ou nœud de réseau (120/130) selon l'une des revendications 1 à 4, dans lequel le premier message comporte en outre des informations de recommandation indiquant qu'au moins une technique de positionnement est disponible.

7. Procédé pour contrôler un service de positionnement, comprenant les étapes suivantes :
recevoir (920), par un équipement utilisateur (110) d'un nœud de réseau (120/130), un premier message lié à une dégradation d'une première technique de positionnement liée à un service de positionnement, le premier message indiquant une deuxième technique de positionnement ; et
contrôler (936), par l'équipement utilisateur (110), le service de positionnement sur la base du premier message.

8. Procédé pour contrôler un service de positionnement par un nœud de réseau (120/130), comprenant les étapes suivantes :
déterminer (1120) une dégradation d'une première technique de positionnement liée à un service de positionnement ; et
transmettre (1130), vers un équipement utilisateur (110), un premier message lié à la dégradation de la première technique de positionnement,
dans lequel le premier message indique une deuxième technique de positionnement, et dans lequel le premier message déclenche l'équipement utilisateur (110) pour qu'il contrôle le service de positionnement sur la base du premier message.

9. Procédé selon la revendication 7 ou 8, dans lequel le premier message comprend en outre au moins une parmi une indication indiquant qu'une exigence de qualité de service, QoS, de positionnement pour la première technique de positionnement n'est pas garantie ou une indication indiquant qu'une exigence d'intégrité de positionnement pour le service de positionnement n'est pas garantie.

10. Procédé selon la revendication 9, dans lequel l'indication indique en outre que l'exigence de QoS de positionnement n'est pas garantie pour au moins un parmi une zone spécifiée ou un temps spécifié.

11. Procédé selon l'une des revendications 7 à 10, dans lequel le premier message comporte en outre des informations de recommandation indiquant au moins une technique de positionnement qui n'est pas disponible.

12. Procédé selon l'une des revendications 7 à 10, dans lequel le premier message comporte en outre des informations de recommandation indiquant qu'au moins une technique de positionnement est disponible.

13. Produit de programme informatique comprenant des instructions de programme stockées sur un support lisible par ordinateur, dans lequel lorsque les instructions de programme sont exécutées sur un ordinateur associé à un équipement utilisateur (110) selon la revendication 1 ou un nœud de réseau (120/130) selon la revendication 2, amènent l'équipement utilisateur (110) associé ou le nœud de réseau (120/130) associé à mettre en œuvre le procédé respectif des revendications 7 à 12.

14. Support non transitoire lisible par ordinateur contenant le produit de programme informatique selon la revendication 13.
